Europäisches Patentamt

European Patent Office

Office européen des brevets

(11) Publication number: **0 348 186**
A2

# EUROPEAN PATENT APPLICATION

(21) Application number: **89306280.2**

(51) Int. Cl.⁴: **H 04 N 7/00**

(22) Date of filing: **22.06.89**

(30) Priority: **22.06.88 GB 8814822**

(43) Date of publication of application:
**27.12.89 Bulletin 89/52**

(84) Designated Contracting States:
**AT BE CH DE ES FR GB GR IT LI LU NL SE**

(71) Applicant: **BRITISH BROADCASTING CORPORATION**
**Broadcasting House**
**London W1A 1AA (GB)**

(72) Inventor: **Thomas Graham A.**
**c/o BBC Research Department Kingswood Warren**
**Tadworth Surrey KT20 6NP (GB)**

(74) Representative: **Abnett, Richard Charles et al**
**REDDIE & GROSE 16 Theobalds Road**
**London WC1X 8PL (GB)**

(54) **Bandwidth reduction system for television.**

(57) An HDTV picture is transmitted in a 625/50 MAC channel using bandwidth reduction techniques. In an 80ms coding branch motion compensation is provided by generating motion vectors for each block of the picture. The motion estimation is performed on a downfiltered and subsampled signal, and peaks in the phase correlation surface are estimated by an inverted-V interpolator function. Vectors are assigned to the blocks by determining the assignment error over both a field period and a frame period and summing the two. A "menu" of eight vectors is available for each block.

To assist compatibility, samples are repositioned before transmission by calculating the average motion per field for each block, rounding the resultant to the nearest even number of pixels and picture lines per field period, and displacing the samples in dependence upon the resultant displacement value and upon the field number from which the sample is derived. Furthermore, a filter is selectively included to provide an attenuating dip centred on 12.5 Hz.

EP 0 348 186 A2

## Description

## BANDWIDTH REDUCTION SYSTEM FOR TELEVISION

### 1. INTRODUCTION.

This application concerns a bandwidth reduction system suitable for transmitting an HDTV (high definition television) picture in a MAC channel.

### 1.1 References.

1. STOREY, R. 1986 "Motion Adaptive Bandwidth Reduction Using DATV". BBC Research Dept. Report No. 1986/5. See also International Patent Application No. WO87/04034.

2. THOMAS, G.A. 1987. "Television Motion Measurement for DATV and Other Applications". BBC Research Dept. Report No. 1987/11.

3. WESTON, M. 1988 "Fixed, Adaptive and Motion Compensated Interpolation of Interlaced TV Pictures". Proceedings of the 2nd International Workshop on Signal Processing for HDTV. 19th Feb. -2nd March 1988.

4. U.K. Patent Application 2 188 509.

5. U.K. Patent Application 2 188 510.

6. IEE Conference Publication No. 293, IBC 1988, September 1988. Various papers on HD-MAC.

7. U.K. Patent Application 2 213 347 (publication date 9th August 1989).

### 1.2 Background.

In 1987 a series of subjective tests was organised to compare algorithms developed by various of the Eureka collaborators, in order to choose an algorithm for demonstration at IBC'88. The 'winning' algorithm is described in reference [1].

An improved bandwidth compression algorithm is described in reference [4], see particularly the variant described at page 7 line 42 to page 8 line 36. (A knowledge of the references is assumed in the following description). In that system there are two (or more) branches or paths through the coder and decoder, referred to as the 20ms and 80ms branches. The time period of each branch refers to the length of time taken to transmit one 'complete image'; thus the 20ms path transmits a 'complete image' in one standard field period whereas the 80ms path requires four field periods. Different sampling structures as well as different prefilters are used in the two transmission modes which are 12.5Hz (80ms) motion-compensated and 50Hz (20ms) non-motion-compensated. The image is divided into blocks, each of which can be assigned one of a plurality of possible motion vectors. This plurality of motion vectors is transmitted as digital assistance data, together with information on the coding branch decisions for each block.

### 1.3 Drawings.

The invention in its various aspects is defined with particularity in the appended claims, and will be described by way of example in the following description with reference to the drawings, in which:-

Figure 1 is a block diagram of the luminance path of a bandwidth reduction encoder embodying the invention;

Figure 2 is a block diagram of the luminance path of a bandwidth reduction decoder embodying the invention;

Figure 3(a) is a horizontal-vertical plot of the prefilter frequency response of the encoder in the high spatial detail mode;

Figure 3(b) is a temporal-vertical plot of the prefilter frequency response of the encoder in the high spatial detail mode;

Figure 3(c) is a horizontal-vertical plot of the prefilter frequency response of the encoder in the high temporal detail mode;

Figure 3(d) is a temporal-vertical plot of the prefilter frequency response of the encoder in the high temporal detail mode;

Figure 4(a) shows the sampling lattice in the high detail channel, this being repeated at 12.5 Hz;

Figure 4(b) shows the sampling lattice in the low detail channel, this comprising a four field sequence at 50 Hz;

Figure 5 is a diagram showing the source lines and output lines and illustrating the vertical re-ordering of samples (sample shuffling);

Figure 6 is a diagram illustrating the interpolation of the correlation surface to determine the location of a peak;

Figure 7 shows the block shape used in the transmission system;

Figure 8 illustrates the operation of a four-point spatial interpolator;

Figure 9 is an overview of the vector assignment process;

Figure 10 is a simple diagrammatic example of sample shuffling, the numbers referring to the sites in the sampling lattice and indicating the field in which the sample is transmitted;

Figure 11(a) is a block circuit diagram for achieving compatibility filtering in the coder; and

Figure 11(b) is a block circuit diagram for achieving compatibility filtering in the decoder.

The example illustrated is given with reference to a 625/50 basic standard but can readily be adapted to other scanning standards. The system is described with reference to a transmission system but is also applicable where the signal is recorded rather than transmitted, and the terms transmitting and receiving and related terms should be considered as including recording and play-back in these circumstances.

## 2. OUTLINE OF THE ALGORITHM.

The basic idea behind the algorithm is thus to use the temporal redundancy present in a typical TV signal to enable the effective picture transmission rate to be dropped from 50Hz to 12.2Hz, thereby achieving a 4:1 bandwidth reduction. In addition, each frame is quincunxially subsampled on fixed sites, providing the full horizontal and vertical resolution available in a sequentially-scanned picture without the need to use interlace; the penalty is a loss of diagonal resolution. The 12.5Hz signal is up-converted at the receiver to 50Hz (or a higher field rate) using motion vector information transmitted in the digital part of the transmission channel.

The transmitted signal is formatted as 625/50/2:1 so that it can be viewed on a conventional MAC receiver to give an acceptable 'compatible' picture for the viewer without an HD-MAC decoder. This is achieved using vertical sample repositioning to halve the number of lines, and motion-dependent sample repositioning to reduce the level of 12.5Hz judder to an acceptable level. A degree of filtering is also applied to reduce the dot patterning due to the folded spectra in the signal.

Some types of picture material (e.g. uncovered background i.e. background which is revealed when a foreground object moves away from being in front of it) cannot be transmitted successfully using this technique. In such areas, a fallback mode is used, whereby the spatial resolution is reduced by a factor of two both horizontally and vertically. Thus the required 4:1 bandwidth reduction is achieved without any temporal subsampling, and without the use of motion compensation. For the purpose of selecting which of these two branches is used, the picture is divided into small blocks; the branch used and the motion vector selected is constant across the pixels in each block.

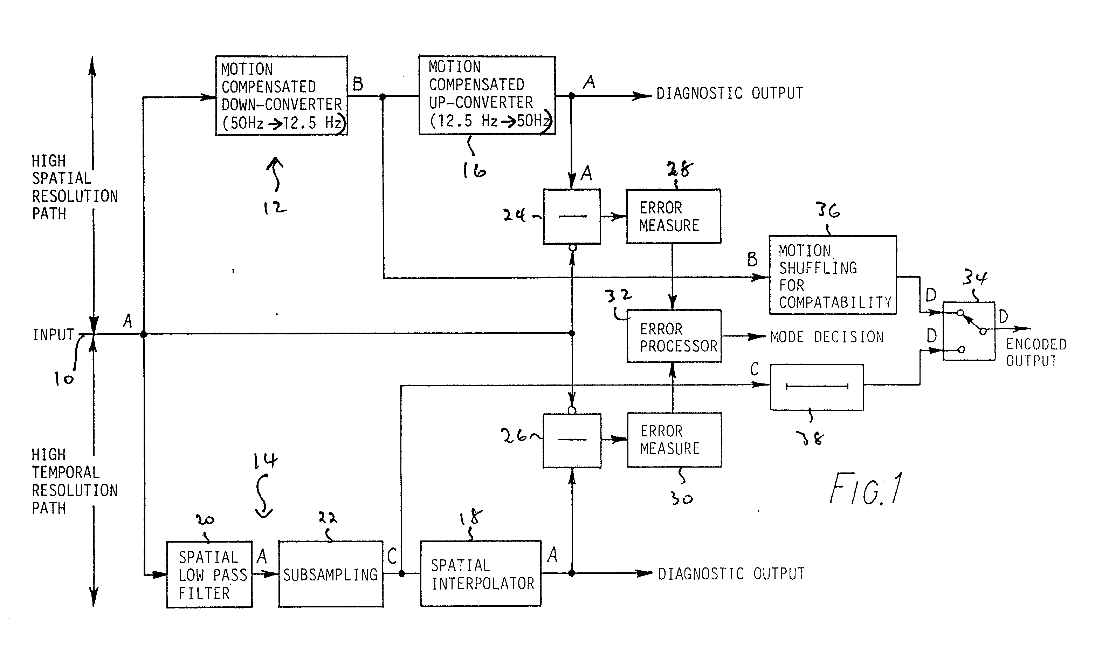

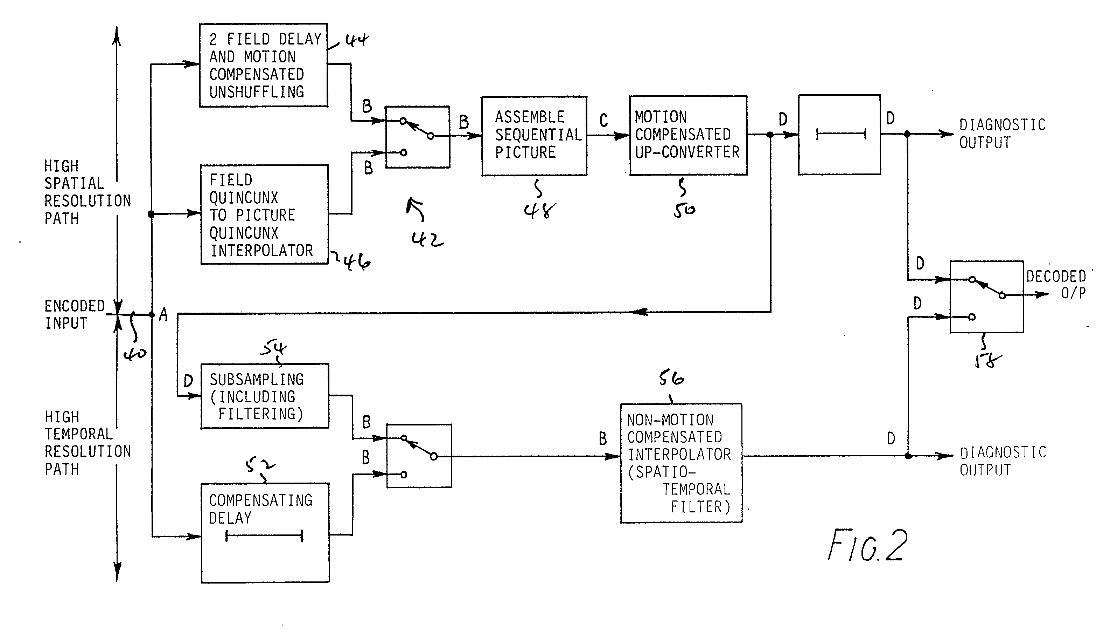

The algorithm can be divided into two basis parts, namely the coder and the decoder. Each of these can then be divided into chrominance and luminance paths, and further subdivided into the two branches (high detail over 80ms and low detail over 20ms). Block diagrams of the luminance paths in the coder and decoder are shown in Figs 1 and 2.

## 2.1 Luminance coding (Fig. 1)

The coder of Fig. 1 takes the incoming luminance signal 10, and codes it using both the high spatial detail (80ms) branch 12 and low spatial detail (20ms) branch 14. Further detail of these branches may be found in reference [4]. The branch that gives the smallest coding error (averaged over a small region) is selected for each block.

Coding for the 80ms branch 12 first requires that the motion present in the signal is estimated. This motion estimation process is performed on a filtered and subsampled picture, so that '625 line' vector measurement hardware can be used on '1250' line signals. Thus there is a significant saving in hardware over a system operating on the full bandwidth signal. The motion estimation process involves first performing phase correlations between corresponding large blocks in successive odd fields in order to determine the dominant vectors in each area of the picture, see reference [2]. These vectors are then assigned to individual small blocks for the purposes of coding.

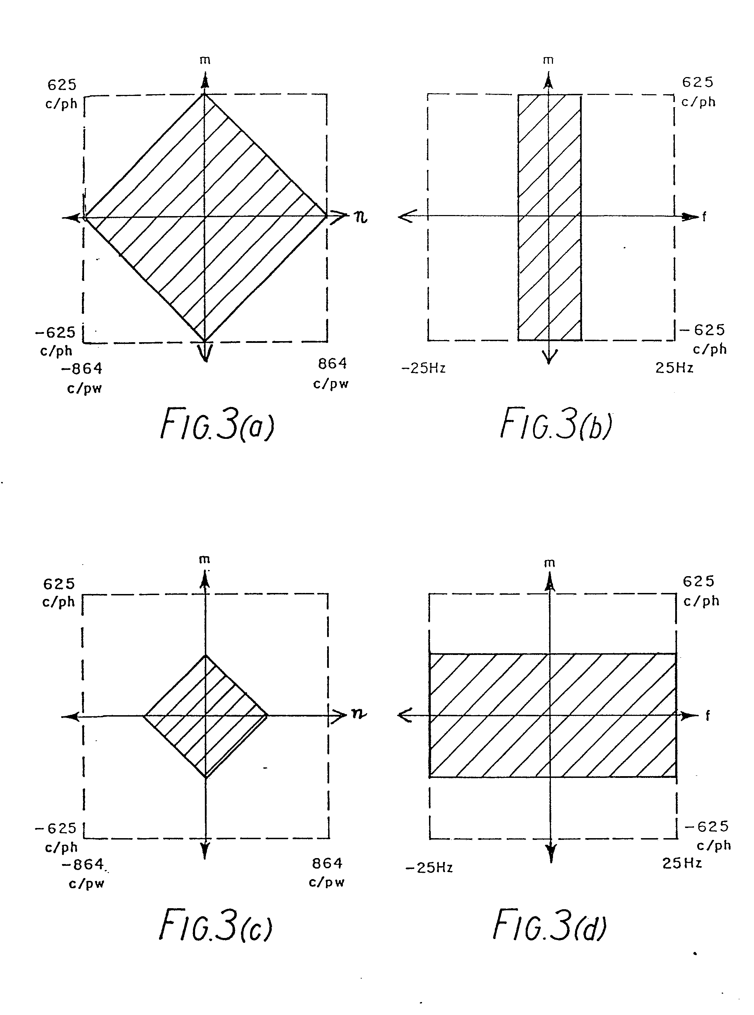

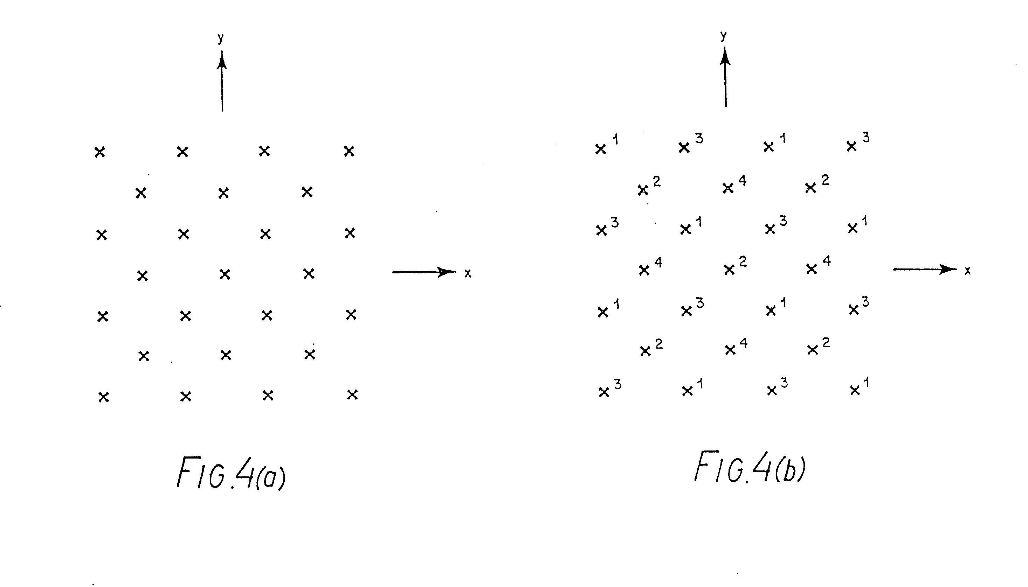

The next stage in coding the 80ms branch involves converting the incoming 1250/50/2:1 signal to 1250/12.5/1:1 using a motion-compensated interlace-to-sequential converter, see reference [3]. It was decided not to use a temporal prefilter in addition to this as the improvement gained was minimal. The resulting sequential picture is pre-filtered and subsampled on a quincunxial lattice. The ideal prefilter shapes are shown in Figs. 3(a) and 3(b), and the subsampling lattice is shown in Fig. 4(a).

Coding for the 20ms branch involves the application of a field-based spatial filter 20 (Figs. 3(c) and 3(d)) followed by subsampling 22 on a quincunxial lattice (Fig. 4(b)).

Both branches are decoded 16,18 in order to assess the coding errors. The 80ms branch decoder 16 performs a quincunx-to-orthogonal interpolation on each 12.5Hz picture, followed by a motion-compensated temporal interpolation using the two nearest 12.5Hz frames to obtain lines of the required field. The 20ms branch decoder 18 is simply a spatial interpolator.

The modulus of the coding error is measured over spatial aperture just larger than the decision block size. To this end the outputs of decoders 16,18 are compared with the input signal in subtractors 24,26 and the resultant errors measured in circuits 28,30. An error processor 32 compares the modulus of the errors and provides a 'mode decision' output which controls a selector 34. The same branch must be chosen for each field in a group of 4 (the number of fields transmitted in 80ms). The 80ms branch is used if its coding error is less than that of the 20ms branch for all four fields (after multiplication by a weighting factor).

To prevent parts of the picture 'flashing' briefly into the high detail mode, a further constraint is placed on the branch decision. Any block for which the 80ms branch is selected for only one or two consecutive periods of 80ms is forced into the 20ms branch.

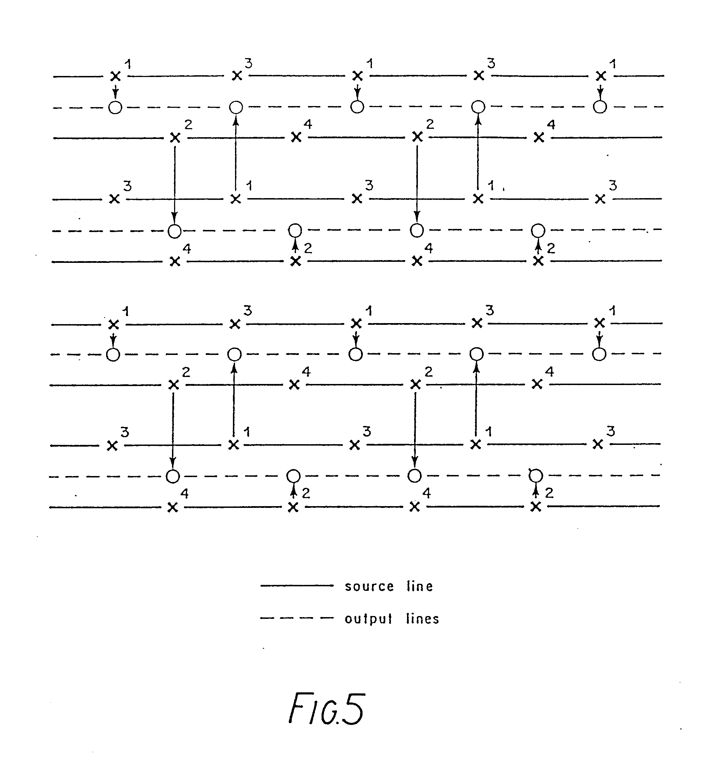

The subsampled picture data from the 80ms branch is subject to some processing in circuit 36 in order to enhance the quality of the 'compatible' picture. Firstly, samples are re-positioned spatially in such a way as to minimise 12.5Hz judder as much as possible; secondly a switched mild temporal filter is applied to stationary and slowly moving areas to reduce the visibility of dot patterning. This filter has to be limited to such areas to prevent motion blur and/or double imaging (it is not shown in Fig. 1). Finally, the samples are line-shuffled as shown in Fig. 5 in order to produce a picture with 575 active lines. A compensating delay 38 is included in the 20ms branch.

### 2.2. Chrominance coding.

The chrominance (UV) signal to be coded is first subject to a vertical field-based prefilter, and is then vertically subsampled by a factor or two. This gives a chrominance signal with a quarter the number of samples per component compared to the luminance (the same ratio as that in a MAC channel).

The resulting signal is fed to two prefilters and subsamplers that are essentially identical to those used for the luminance, except that the 80ms branch is not motion-compensated (all vectors are set to zero). The subsampled signals are switched into the channel using a decision signal derived from the luminance vector and branch-selection information. In relation to the chrominance coding, see also reference [7].

### 2.3. Luminance decoding (Fig. 2)

On arrival at the receiver input 40, the luminance signal is first passed through a switched temporal filter (not shown in Fig. 2), which performs the inverse filtering operation to the filter in the coder. The filter is not exactly an inverse due to temporal edge effects, but the differences can safely be ignored.

The 80ms branch decoder 42 takes the unfiltered signal and performs sample repositioning 44 to reverse the operation performed in the coder. This process will again not be a true inverse, due to samples lost at boundaries between blocks having different motion vectors or blocks coded using different branches. Also, appropriate samples are not available in blocks sent using the 20ms branch. In order to have a complete picture's worth of samples available for the quincunx-to-orthogonal interpolator, the missing samples are derived in interpolator 46 from the field of samples that is co-timed with the 12.5Hz sequential picture. A spatial interpolator 48 generates samples for both sites in 20ms-mode blocks, and for samples lost during the repositioning process. The use of this interpolation method for the replacement of lost data as well as for generating samples in 20ms-mode blocks leads to a significantly lower level of visibility of the 'dots' produced by the shuffling process. A quincunx-to-orthogonal interpolation is then performed to generate sequential pictures at 12.5Hz. Output pictures are generated by motion-compensated temporal interpolation 50 using two adjacent 12.5Hz frames.

The 20ms branch decoder takes samples directly from the channel in blocks sent in this mode through a delay 52. However, samples adjacent to these blocks are also required for the correct operation of the spatial interpolator. These samples are taken directly from the reconstructed signal from the 80ms branch decoder through sub-sampler 54. Strictly speaking, a spatial prefilter should be used before the reconstructed picture is subsampled, but as the samples are only used to provide data for the edges of the 20ms spatial interpolation aperture, a degree of aliasing is of no consequence. A complete field of samples is thus available to the spatial interpolator 56, which generates the output signal for this branch.

A hard switch 58 is performed between decoded signals from the two branches (using the transmitted branch selection information), to form the final output picture.

### 2.4 Chrominance decoding

The chrominance decoder is very similar to that used for the luminance, except that the motion vectors used in the 80ms path are set to zero. No temporal unfiltering or sample unshuffling is required, since these 'compatibility-improving' features are not used for the chrominance signals.

After decoding, a field-based vertical interpolator is used to generate immediate lines, so that chrominance information is available on every field line.

Both the chrominance coding and decoding algorithm are essentially the same as described in reference [1]. The implementation was changed so that the branch switching information for the luminance and chrominance was co-timed. If the earlier algorithm had been used directly, the branch switching signal would need to have been modified so that it referred to the branch used for the preceding four fields, rather than the current four-field group. The only important difference from a hardware point of view is that a temporal postfilter was used in the chrominance 80ms branch. This is almost certainly an unnecessary sophistication and could be omitted with negligible change in picture quality. Alternatively, the earlier chrominance algorithm could be used directly, with minor modifications to the chrominance DATV derivation.

### 3. DETAILS OF THE ALGORITHM

This section gives details of the filter coefficients, weighting factors, etc. referred to in the outline description of the previous section. The details presented below represent a good 'working set'; we believe the quality of both the HD-MAC and 'compatible' pictures is unlikely to be significantly improved by further optimisation although minor improvements could probably be achieved. Software to simulate the system for assessment purposes may be divided up into a number of FORTRAN programs.

## 3.1 Luminance coding.

### 3.1.1 Motion vector estimation

The principles of motion vector estimation are disclosed in references [4] and [5]. The details of the preferred method in accordance with this invention will now be described.

#### Subsampling the input sequence.

The incoming sequence is prefiltered both horizontally and vertically (in a field) with the 7-tap FIR filter shown in Table 1 below. In the case of 'film motion' sequences, the vertical filter is applied to picture lines rather than field lines. The filtered sequence is orthogonally subsampled to produce a quarter-size picture.

#### Measuring dominant vectors.

The odd fields of each quarter-size subsampled picture (which would contain 720*288 samples if the HD source contained 1440*1152) are divided up into blocks of 32 pixels by 16 field lines, with an overlap of 4 pixels horizontally so that there is an integral number of blocks across the picture. The block spacing is thus 30 pixels horizontally and there is a total of 24*18 blocks for an HD input picture.

Each block is multiplied by a windowing function which is unity over the whole block except for the first and last three pixels in a row/column, where it drops to 2/3, 1/3 and 0 as the edge of the block is approached.

A phase correlation is performed between corresponding blocks in successive odd fields. The resulting correlation surface is subjected to a first-order recursive temporal filter, such that each point on the surface is set to 0.7 times its initial value plus 0.3 times its filtered value for the preceding field 1. The resulting correlation surface is searched for peaks in an area corresponding to velocities in the range +/- (plus or minus) 15 pixels/picture period and +/- 4 picture lines per picture period in the reduced-size picture. In the full-size HDTV picture this represents a maximum velocity of 30 pixels and 8 picture lines per picture period (1 sec/picture width; 5.75 sec/picture height). A maximum of 3 peaks are found.

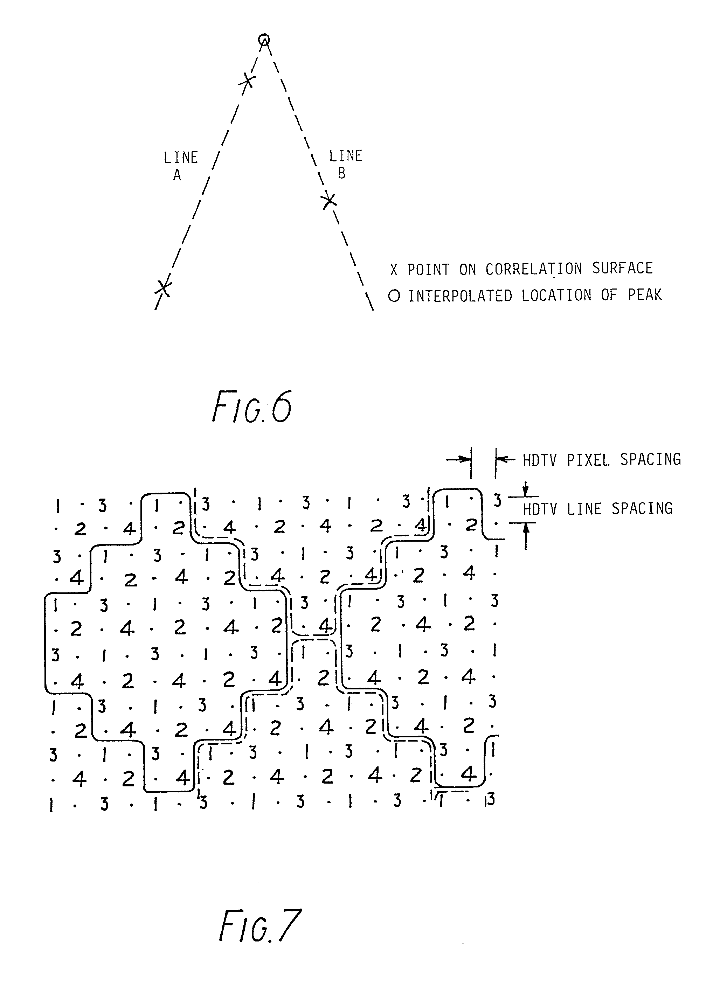

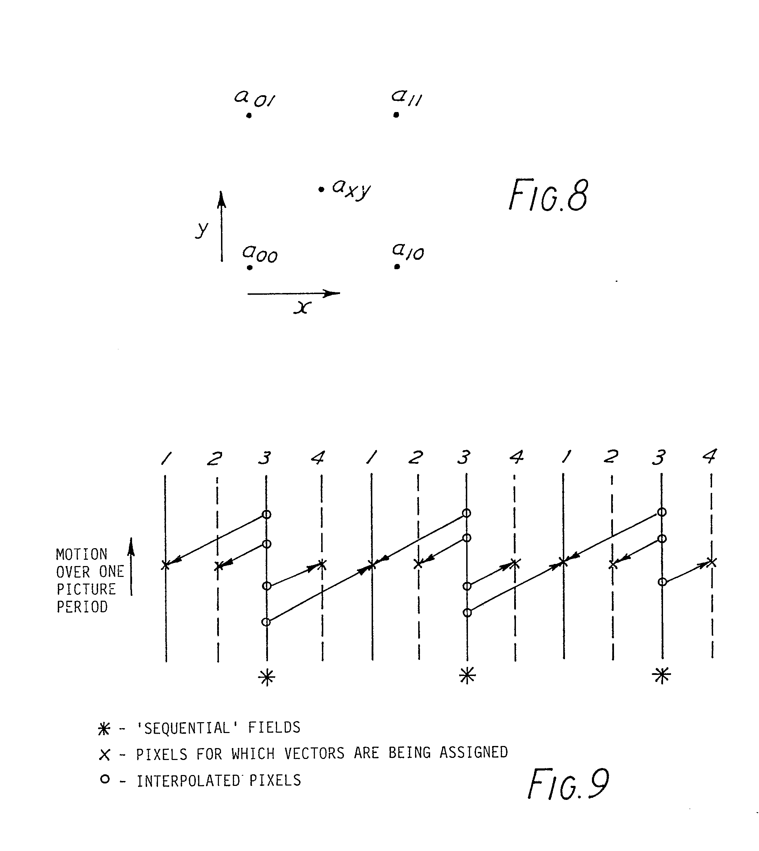

The peaks in the correlation surface are interpolated to estimate the sub-pixel part of the displacement. This interpolation is performed by fitting an inverted 'V' shape to the three nearest points independently in x and y (Fig. 6). This is achieved by fitting a line A through the highest point and the lowest adjacent point, and then fitting a line B of equal but negative gradient to line A through the other adjacent point. The intersection of the lines gives the peak to sub-pixel accuracy. No quantisation is applied to the resulting vector components (i.e. they are processed as real numbers), although they are unlikely to be accurate to more than 0.1 pixel in the reduced size picture.

A list of trial vectors is compiled for each block using vectors measured in the block itself and the surrounding blocks. Vectors are added to the list as long as they meet the following criteria:

(a) The vector must differ from all vectors already on the list by at least 0.1 pixel/picture period (on the scale of the reduced-size picture).

(b) The height of the peak for the vector in the correlation surface must be at least 0.25 times the height of the largest peak in the current measurement block. A maximum of 8 vectors are chosen, and they are selected with the following priority:

(1) The vectors measured in the current block (this will be a maximum of three),

(2) the biggest vectors in the adjacent blocks to the left, right, above and below,

(3) the second biggest vectors in these blocks,

(4) the biggest vectors in the diagonally adjacent blocks to the top left, bottom right, top right and bottom left,

(5) the second biggest vector in these blocks. In many cases, there will be less than 8 vectors in the list after all these vectors have been considered, using the selection rules (a) and (b) above. In this case, the list is left short.

Thus the motion estimation procedure generates a "menu" of motion vectors to indicate which vectors are available for use in each area of the picture, together with index numbers to indicate which vector from the menu has been assigned to each small block. The use of menus is beneficial as a bit-rate reduction technique for the transmission of the motion vector information.

#### Assignment of vectors to decision blocks.

Each decision block is assigned one vector from the menu of the measurement block in which its centre lies. The blocks are 12 by 12 pixel diamonds (Fig. 7) with the spacing of the block centres being at 12 pixels or lines and the area of the block comprising 72 pixels. The fields on which the samples are transmitted are indicated by the numbers 1 to 4. However, as the assignment is performed on the quarter-size downfiltered sequence, they are effectively 6*6 diamonds as far as the assignment process is concerned.

The first stage of the assignment process is to perform an interlace-to-sequential conversion on very other odd downfiltered field, using a fixed vertical-temporal filter (Table 2 below). These conversions are hence performed at the rate of 12.5Hz. The resulting picture is referred to as the 'sequential field' in the following description. In the case of 'film motion' video, the sequential field is formed using the original odd field and the following even one, which together constitute a sequentially-scanned image.

An assignment error is calculated at every pixel in odd field lines of the measurement block for every vector in the menu by subtracting the preceding odd field from a version of the sequential field displaced by the trial vector. A 4-point linear spatial interpolator (Fig. 8) is used to interpolate the sequential field to deal with sub-pixel vectors.

In Fig. 8, the value of a point $a_{xy}$ is to be interpolated, where x and y each lie between 0 and 1. The values $a_{00}$ etc., are the amplitudes of the signal at the four pixels surrounding the required point. The value $a_{xy}$ is then given by:

$$a_{xy} = ((1-x).a_{00} + x.a_{01}).(1-y) + ((1-x).a_{01} + x.a_{11}).y$$

The molecules of the resulting error signal is filtered with a simple rectangular-aperture filter of 9 pixels by 5 field lines in the quarter-size downfiltered sequence.

A second assignment error is calculated by repeating this process using the even field immediately preceding the sequential field. The trial vectors are scaled down by a factor of 2 and the different vertical position of the field lines is allowed for. In the case of 'film motion' input, the factor of two scaling is not used because both fields refer to an instant of time one picture period before the sequential field.

The total assignment error for the vector is equal to the sum of these two errors, obtained over a picture or frame period (two field periods) and over a single field period, multiplied by a weighting factor. The weighting factor may always be set to unity, although there may be some benefit in having a factor that increases slightly with the modulus of the vector being tested. A suitable form of weighting factor was found to be:

$$W = 1 + 0.05 * mod(V)$$

where mod(V) is the magnitude of the motion vector in pixels per picture period in the subsampled picture. The trial vector that gave the minimum total assignment error is selected.

This process generates vectors which indicate the displacement that should be applied to the sequential field in order to generate the two preceding fields. Vectors for the two fields following the sequential field are generated by a similar process, but the sign of the vectors is reversed. The vectors for the immediately adjacent fields are simply taken as half the vectors for the fields one picture period away. This produces vector information in a form suitable for performing a 12.5Hz to 50Hz upconversion. Figure 9 is an overview of the whole assignment process. Note that a new set of vector information is derived every picture period. The assignment error is formed from the modulus differences between sites marked o and x on Fig. 9.

The magnitude of the vectors in the vector menu are simply multipled by a factor of two to generate information that can be applied to the original sequence.

### 3.1.2. Coding for the 80ms branch.

A motion-compensated interlace-to-sequential conversion is performed on every other odd field of the original input sequence, using the method outlined in ref. [3]. This is achieved using a filter that has 6 fixed vertical taps in the current field, and 5 vertical taps in the fields either side. Each of these latter taps consists of two consecutive horizontal sites, providing sub-pixel interpolation for horizontal movements.

There are five different sets of vertical-temporal coefficients available, corresponding to vertical motion speeds from 0 to 1 picture lines per field period in steps of 0.25. A linear interpolation is performed between each set to derive a filter for any fractional vertical speed. The integer parts of horizontal and vertical motions are dealt with by simply displacing the filter aperture by the appropriate number of pixels and field lines. The filter coefficients for the vertical-temporal filters are listed in Tables 3A and 3B below, where Table 3A defines the coefficient nomenclature and Table 3B gives actual values for different motion speeds.

In the case of a video signal with 'film motion', a sequentially scanned image is available directly, so there is no need to perform a conversion as such.

Each sequential image is prefiltered and subsampled as indicated in Figs. 3(a) and (b) and Fig. 4(a). The filter coefficients are listed in Table 4 below. The total size of the filter aperture is 9 pixels by 9 lines, although a number of the coefficients are zero.

### 3.1.3. Coding for the 20ms branch.

The video signal to be coded is prefiltered and subsampled as shown in Figs. 3(c) and (d) and Fig. 4(b). The filter coefficients are listed in Table 5 below. The total size of the filter aperture is 13 pixels by 7 field lines.

### 3.1.4. Branch selection.

The first stage of reconstruction for the 80ms branch involves performing a quincunx-to-orthogonal interpolation on each subsampled sequential image at a rate of 12.5Hz. The interpolator used for this is identical to that described in reference [1]. The filter coefficients are listed in Table 6 below. The total size of the filter aperture is 7 pixels by 9 lines.

The second stage involves performing a motion-compensated up-conversion from 12.5Hz sequential to 50Hz interlaced. This is achieved with two four-tap filters in successive sequential images. A spatial interpolation is performed within each image as shown in Fig. 8. A straightforward linear interpolation is performed on the resulting values, according to the position in time of the output field compared to that of the two sequential images. Although this process could be used to generate a sequentially-scanned image, only the lines of the required interlaced field are calculated.

The 20ms mode is reconstructed using a spatial interpolator whose coefficients are listed in Table 7 below. These coefficients can be thought of as representing a filter that is applied to the subsampled data after zeroes have been inserted at the missing sample locations. The aperture of the filter when looked at in this way is 17 pixels by 7 field lines, although in practice this reduces to 5 pixels by 7 field lines in the subsampled data.

Coding error signals are formed by subtracting the decoded signals from the original input signal. A spatial filter with a rectangular aperture of 17 pixels by 9 field lines is applied to each error signal. These signals are then sampled at the centre of the 12 by 12 pixel diamond-shaped blocks. The 80ms error is then multiplied by 0.45, and the 20ms error by 0.55 (although recent work has shown that 0.47 and 0.53 may be better weighting factors). If the resulting error value for the 80ms mode exceeds that for the 20ms mode in any one of the four fields in a given group then the block is sent in the 20ms mode; otherwise the 80ms mode is selected. A 4-field group consists of the field co-timed with the sequential image, the two preceding fields, and the following field. The fields are numbered 1 to 4, so that field 3 is co-timed with the sequential image.

A non-linear temporal filter is applied to the resulting branch decision signal. Any blocks which have been selected for transmission using the 80ms branch for only one or two successive 4-field groups are transmitted using the 20ms branch.

### 3.1.5. Sample repositioning and switching.

Prior to switching into the channel, the samples from the blocks chosen for transmission in the 80ms branch are re-positioned to reduce 12.5Hz judder on the compatible picture, see sections 2.1 and 2.3 above.

The first stage of the repositioning operation is to calculate the the amount of displacement to apply. For each 80ms block, the the average motion per field in the horizontal and vertical directions is calculated by adding together the two picture-period vectors measured in the 4-field group, and dividing by four. The resulting vector components are rounded to the nearest even number of pixels and picture lines per field period. This displacement will be one that can be applied by moving samples from one fixed sample site to another.

Samples from fields 2 and 4 are moved by $+/-$ the calculated displacement in such a way that every site in the blocks to be transmitted receives a pixel. Where necessary, pixels are taken from 80ms branch subsamples that lie outside the actual selected blocks. When the sum of the x and y displacements is not a multiple of 4 pixels per field period, samples in field 2 will end up occupying sites normally used by field 4 samples and vice versa; this is of no consequence.

Samples in field 1 are moved by twice the calculated displacement since they are transmitted two field periods before the time corresponding to the 12.5Hz sequential image from which they originated. As both the x and y movement will always be a multiple of 4, they will thus always be moved to other sites in field 1.

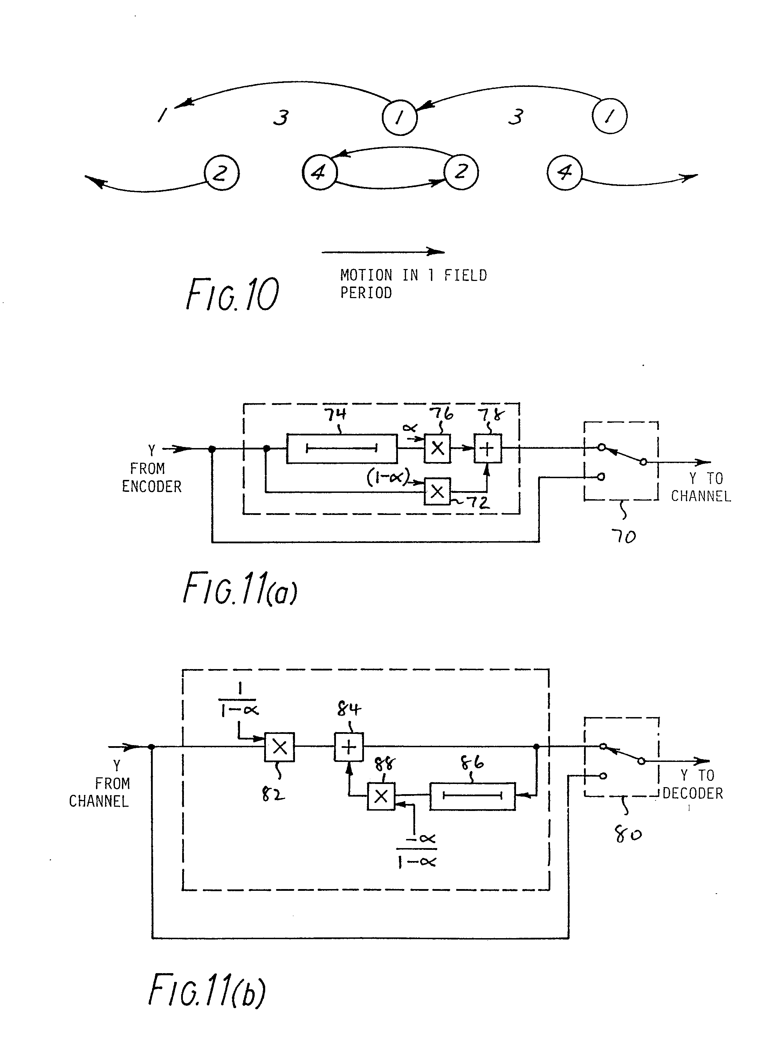

Samples in field 3 are never moved, as field 3 is co-timed with the sequential image. Figure 10 illustrates the sample movements in the simple case of a horizontal motion of 2 pixels per field period. An inverse process is performed at the decoder.

A hard switch is performed between the repositioned 80ms and the 20ms-branch samples according to the branch selection signal.

### 3.1.6. Filtering to improve compatibility

A filtered signal is generated by passing the switched samples through a two-tap FIR temporal filter that places a 6db dip or notch centered on a temporal frequency of 12.5Hz. A hard switch is performed between the filtered and unfiltered signal, such that the filtered signal is only used in 80ms-branch blocks in which the motion speed averaged over the four field group is less than 1.5 pixels per field period. The resulting signal constitutes the luminance signal that is transmitted. Figure 11(a) illustrates the filtering and switching process in the coder and Figure 11(b) illustrates the filtering and switching process in the decoder.

As shown in Figure 11(a), the luminance signal from the encoder is applied directly to one input to the switch 70, which input is used for the low detail signal and for the high detail signal in areas of high motion speed. The luminance signal is also applied to a multiplier 72 where it is multiplied by a factor (1-alpha) and through a delay 74 to a multiplier 76 where it is multiplied by a factor alpha. The outputs of multipliers 72 and 76 are added in an adder 78 and applied to the switch 70. The decoder filter of Figure 11(b) receives the luminance signal from the channel and applies it to switch 80. It is also applied to multiplier 82 where it is multiplied by 1/(1-alpha). The output of multiplier 82 is applied through an adder 84 both to the other input of switch 80 and to a delay 86. The output of delay 86 is the multiplied by -alpha/(1-alpha) in multiplier 88 and the resultant applied to the other input of adder 84. In both the coder and decoder the parameter alpha can take the value 0.249. This then gives 6dB attenuation and boost respectively at 12.5Hz.

The samples are placed in the channel after a vertical reordering process, which converts the 1250-line signal to a 625-line signal (Fig. 5).

### 3.2 Chrominance coding

### 3.2.1. Vertical prefiltering and subsampling.

The incoming UV signals are subject to a vertical field-based prefilter with an aperture of 7 field lines. The coefficients are the same as those used in the 2:1 downsampler prior to vector measurement, listed in Table 2. The signals are then subsampled by a factor of two vertically. Strictly speaking, the U and V signals should be subsampled on different alternate lines, such that U is sampled on one field line, V on the one below, and so on. For the purposes of the simulation, U and V were sampled on the same lines. This has no effect on the performance of the algorithm; however it simplifies the software somewhat.

After sampling, the chrominance components can be considered as a pair of quarter-sized single-component signals, and each treated in a very similar way to the luminance signal.

### 3.2.2. Chrominance coding for the 80ms mode

The coding for this mode is very similar to that for the luminance 80ms mode. However, as motion compensation is not used, a non-motion-compensated interlace-to sequential converter is employed. This is the same type as used in the vector assignment operation and the coefficients are listed in Table 2.

### 3.2.3. Chrominance coding for the 20ms mode.

This prefiltering and subsampling operation is identical to that used for the luminance component.

### 3.2.4. Generation of chrominance branch selection signal.

The chrominance branch selection signal is derived from the luminance branch selection and vector data for the four luminance blocks which are spatially coincident with the chrominance block. As each chrominance block holds the same number of U and V samples as there are Y samples in a luminance block, it occupies four times the area of the picture; the blocks are positioned so that the boundaries coincide. The chrominance block is transmitted using the 80ms branch if this branch was selected for all four luminance blocks, and if the average velocity of all the luminance blocks did not exceed 1.5 pixels per field period; otherwise the 20ms block is used.

### 3.2.5. Sample switching.

The selected chrominance samples are simply switched into the channel using a hard switch. There is no motion-dependent sample repositioning or temporal filtering. The vertical repositioning operation shown in Fig. 5 is still required.

### 3.3 Channel simulation and display of compatible picture

The luminance and chrominance signals derived as explained above could be passed directly through a channel simulator. However, for generating material for the forthcoming subjective tests, no channel simulator was used. Instead, a small amount of noise was added to the signals. The noise was derived from a channel simulation program, and had a level corresponding to a carrier-to-noise ratio of 26dB.

The luminance compatible pictures could be viewed by looking directly at the transmitted signal. To view the chrominance signals, a vertical interpolator is required; the type used was the same as that to be discussed in section 3.5.

A 'conventional' MAC received does not have quite enough bandwidth to display the compatible pictures without performing a degree of filtering. Therefore a horizontal filter was applied to the luminance and chrominance signals to give a more accurate idea of what the compatible picture would look like. The filter performs a fairly sharp cut at a frequency corresponding to 8.4MHz (assuming the sampling rate of the signal is 20.25 MHz). The coefficients of this filter are listed in Table 8 below.

### 3.4 Luminance decoding.

The signal from the channel is first subject to an inverse filtering and switching operation, in order to reverse the effects of the processes described in section 3.1.6 (see Fig. 11(b)).

The basic operation of the luminance decoder is as described in section 2.3. The filters and interpolators have been described in detail in section 3.1.4, with the exception of one interpolator in the 80ms branch. Details of this interpolator are as follows.

When decoding the 80ms branch, an interpolator is required to generate samples lost in the sample repositioning process, and samples in areas sent using the 20ms branch. This interpolator is implemented by using the 20ms branch spatial interpolator operating on all the samples in field 3. This generates samples on odd field lines. Samples on even field lines are generated using a simple 4-tap vertical interpolator, whose coefficients are given in Table 9 below.

It is possible to perform lower quality decoding using a simpler (and hence cheaper) decoder by sacrificing one of the two temporal taps in the 80ms mode decoder, and using less taps in the 20ms branch spatial interpolator. This results in a small amount of 12.5Hz judder in some picture areas in the 80ms mode, and marginally lower power quality in areas sent in the 20ms mode.

### 3.5 Chrominance decoding.

All the filters used in this decoder are the same as those used in the luminance path, as described in section 2.4.

A vertical filter is used to form a chrominance signal for every field line from the 2:1 vertically subsampled signal. Samples on output field lines which are coincident with a transmitted field line are formed using a filter with coefficients 1/4, 1/2, 1/4. Samples on intermediate lines are formed using filter coefficients of 1/2, 1/2 (ie. the output line is the average of the one above and the one below). This filter is very simple; the vertical chrominance resolution could be improved somewhat by using additional taps.

## 4. DATV BIT RATE REQUIREMENTS.
An initial investigation has been carried out into bit rate reduction techniques applicable to DATV vector and branch selection information. It is possible to use these preliminary results to assess the feasibility of transmitting the amount of data required by the proposed algorithm described below.

### 4.1 Raw data rate for assigned vectors.
Let us assume that the number of pixels in an HDTV picture will be four times that in a Rec. 601 picture, ie. 1440*1150. With the block size proposed here, there would be 1440*1150/72-23,000 blocks in one such picture. The raw bit rate for the system described here is 3.17 bits per block per picture period, as there is a maximum of 9 possible states for a block (8 vectors in the 80ms branch, see section 3.1.1 above, and the 20ms branch) and 2 to the power of 3.17 is 9. Thus the raw bit rate for this information is:
3.17 * 23,000 * 25Hz = 1.82 Mbit/s (assigned vectors).

### 4.2 Raw data rate for vector menu information.
There are 24*18 = 432 'menu' blocks in a frame. Although the menu of up to 8 vectors could be transmitted explicitly for each block, a reduction in the amount of data that need be transmitted can be achieved by transmitting just the 3 vectors that were actually measured for that block, plus information on the heights of the peaks in the correlation surface. From this information, the menu of 8 vectors can be derived as explained in section 3.1.1. If 7 bits were used to transmit each x component (giving a range of +/-16 pixels/picture period to an accuracy of 0.25 pixel), 6 bits were used for the y component (as the largest y vector is only +/- 8) and 5 bits were used for the peak height, a total of 18 bits would be required for each vector. The total bit rate for the menu information would thus be:
432 * 3 * 18 * 25Hz = 0.58 Mbit/s (vector menus).

### 4.3 Use of bit-rate reduction.
The total raw data for assigned vectors and menu information is :
1.82 + 0.58 = 2.40 Mbit/s (total; no bit-rate reduction)
which is about a factor of 2.5 times higher than the capacity that is likely to be available. Previous work has shown that the bit rate for assigned vector information can probably be reduced to about 1.0 bits/block using reasonably simple techniques. This would reduce the bit rate for this part of the DATV signal from 1.82 to about 0.57 Mbit/s. The total rate without any bit rate reduction being applied to menu information would then be:
0.57 + 0.58 = 1.15 Mbit/s (total; with bit-rate reduction)
This figure is very close to the likely available capacity, although some overhead (maybe 10-20%) should be allowed for error-correcting codes.
Thus it seems likely that the data rate required by the system described here can be reduced to about 1 Mbit/s by the use of relatively simple coding schemes (such as Huffman coding). These previous investigations only used redundancy in the horizontal direction; the use of vertical and temporal redundancy should provide additional reduction of bit rate.

## 5. SOME GENERAL COMMENTS ON THE CHARACTERISTICS OF THE ALGORITHM.
The principal aim when designing the algorithm was to create a system that could transmit the full horizontal and vertical resolution available in a 1250-line sequential signal in all areas of the picture except those undergoing uncorrelated movement. This aim has been achieved, with the caveat that full vertical resolution cannot be achieved with an interlaced source.
In realising this aim, a number of compromises have been made, resulting in some aspects of the algorithm having a poorer performance than would be the case in a less ambitious algorithm. The single biggest problem is probably the small amount of 12.5Hz judder that is visible in the compatible picture. In some critical test sequences it is also possible to see a very small amount of such judder in the HD-MAC decoded sequence, particularly in areas of uncovered/obscured background.
The decoder for this algorithm needs to be more complex than a decoder for, say, an algorithm in which the 80ms mode is non-motion-compensated but there is a motion-compensated 40ms mode. The extra complication (or, to be more accurate, extra chip area) is needed principally because of the additional storage required to implement a two-tap temporal post-filter over a period of 80ms. It would be possible to build a decoder that had only one temporal tap as discussed in section 3.4, although the level of 12.5Hz artefacts in the decoded picture would be higher.
It may be the case that until sequential sources offering very high resolution become readily available, the resolution advantages of this algorithm do not justify themselves in terms of the additional problems introduced.

## 6. POSSIBLE IMPROVEMENTS TO THE ALGORITHM.
Most aspects of the algorithm (for example the vector measurement and the 80ms coding and decoding) appear to work well.
There is still some scope for minor improvements, though, principally in the area of branch selection. Relatively plain areas of the picture are often transmitted using the 20ms branch, despite the fact that a valid vector is assigned. This has the effect of increasing the visibility of channel noise, which is more objectionable in 20ms-mode areas. Noise in such areas has higher temporal frequency and lower spatial frequency characteristics compared to noise in 80ms-mode areas; thus from a viewing distance of 3H or so it may still be visible whereas the higher spatial frequency noise is too fine to see. Incorrect branch selection can also lead to the loss of low-level spatial detail.

This problem is probably caused by noise on the input signal to the coder; being of an uncorrelated nature temporally, noise tends to give lower coding errors when the 20ms branch is used. It should be possible to incorporate a method of measuring noise on the input signal, and to select the 80ms mode whenever the corresponding coding error is only as high as would be expected from the source noise. The noise measurement could probably be achieved by determining the minimum coding error for the 80ms mode in each picture. This would give an indication as to the error to be expected in areas that match perfectly except for noise.

Other minor improvements could also be achieved by re-designing the 20ms mode pre- and post-filters; the ones used so far suffer from a degree of ringing.

TABLE 1

Prefilter for 2:1 spatial downsampling prior to
vector measurement

-1/16
0
5/16
0.5          ---- central tap
5/16
0
-1/16


TABLE 2

Non-motion-compensated interlace-to-sequential
converter

| +0.031 x | | +0.031 x |
|---|---|---|
| | -0.026 x | |
| -0.116 x | | -0.116 x |
| | +0.526 x | |
| +0.170 x | o | +0.170 x |
| | +0.526 x | |
| -0.116 x | | -0.116 x |
| | -0.026 x | |
| +0.031 x | | +0.031 x |
| preceding field | current field | following field |

x - pixels in original interlaced fields

o - pixel being interpolated

TABLE 3A

Motion-compensated interlace-to-sequential
conversion filter

Coefficient arrangement:

```
                    a⁰,⁵
       a⁻¹,⁴                        a¹,⁴
                    a⁰,³
       a⁻¹,²                        a¹,²
                    a⁰,¹
       a⁻¹,⁰  o                     a¹,⁰
                    a⁰,⁻¹
       a⁻¹,⁻²                       a¹,⁻²
                    a⁰,⁻³
       a⁻¹,⁻⁴                       a¹,⁻⁴
                    a⁰,⁻⁵
```

preceding field    current field      following field

$a^{t,y}$ - coefficient at given vertical/temporal location

o - location of pixel being interpolated


TABLE 3B

Table of coefficient values as a function of motion speed:

| t, y: | Motion speed (picture lines/field period): | | | | |
| | 0 | 0.25 | 0.5 | 0.75 | 1.0 |
|---|---|---|---|---|---|
| -1,-4 | 0.0118 | 0.0214 | 0.0347 | 0.0332 | -0.0002 |
| -1,-2 | -0.1205 | -0.1331 | -0.1344 | -0.0867 | 0.0011 |
| -1, 0 | 0.2917 | 0.2831 | 0.2376 | 0.1328 | -0.0044 |
| 1, 2 | -0.1205 | -0.1135 | -0.1109 | -0.0892 | -0.0044 |
| -1, 4 | 0.0118 | 0.0066 | 0.0133 | 0.0255 | 0.0010 |
| 0,-5 | -0.0149 | -0.0172 | -0.0224 | -0.0115 | 0.0210 |
| 0,-3 | 0.0374 | 0.0380 | 0.0184 | -0.0466 | -0.1071 |
| 0,-1 | 0.4165 | 0.4248 | 0.4661 | 0.5392 | 0.5851 |
| 0, 1 | 0.4165 | 0.4248 | 0.4661 | 0.5392 | 0.5851 |
| 0, 3 | 0.0374 | 0.0380 | 0.0184 | -0.0466 | -0.1071 |
| 0, 5 | -0.0149 | -0.0172 | -0.0224 | -0.0115 | 0.0210 |
| 1,-4 | 0.0118 | 0.0066 | 0.0133 | 0.0255 | 0.0010 |
| 1,-2 | -0.1205 | -0.1135 | -0.1109 | -0.0892 | -0.0044 |
| 1, 0 | 0.2917 | 0.2831 | 0.2376 | 0.1328 | -0.0044 |
| 1, 2 | -0.1205 | -0.1331 | -0.1344 | -0.0867 | 0.0011 |
| 1, 4 | 0.0118 | 0.0214 | 0.0347 | 0.0332 | -0.0002 |

(Notice that the coefficients in the central field are always symmetrical about the centre. As the motion speed increases the coefficients in the adjacent fields get smaller, until at 1.0 picture lines/field period they give almost no contribution to the interpolated signal.)

For vertical motion speeds between the values listed above, linear interpolation is performed between the sets of coefficients. Contributions from adjacent fields are obtained by horizontal interpolation from the two nearest pixels; the interpolated value is then multiplied by the appropriate coefficient.

## TABLE 4

### Diagonal spatial prefilter in the 80ms branch coder

| picture lines | | 0 | 1 | 2 | 3 | 4 |
|---|---|---|---|---|---|---|
| | 4 | 0 | -0.0078 | 0 | -0.0078 | 0 |
| | 3 | 0.0210 | 0 | 0.0286 | 0 | -0.0078 |
| | 2 | 0 | -0.0598 | 0 | 0.0286 | 0 |
| | 1 | 0.1978 | 0 | -0.0598 | 0 | -0.0078 |
| | 0 | 0.5003 | 0.1978 | 0 | 0.0210 | 0 |
| | | 0 | 1 | 2 | 3 | 4 |
| | | | | pixels | | |

(These coefficients represent one out of the four symmetrical quadrants)

## TABLE 5

### Spatial prefilter in the 20ms branch coder

| field lines | | 0 | 1 | 2 | 3 | 4 | 5 | 6 |
|---|---|---|---|---|---|---|---|---|
| | 3 | -0.0007 | 0.0000 | 0.0027 | 0.0062 | 0.0056 | 0.0002 | -0.0016 |
| | 2 | -0.0133 | -0.0172 | -0.0210 | -0.0143 | -0.0017 | 0.0065 | 0.0043 |
| | 1 | 0.0946 | 0.0695 | 0.0181 | -0.0167 | -0.0182 | -0.0029 | 0.0027 |
| | 0 | 0.2227 | 0.1817 | 0.0917 | 0.0158 | -0.0134 | -0.0099 | -0.0021 |
| | | 0 | 1 | 2 | 3 | 4 | 5 | 6 |
| | | | | | pixels | | | |

(These coefficients represent one out of the four symmetrical quadrants)

## TABLE 6

### Quincunx-orthogonal interpolator 80ms branch decoder

| picture lines | | 0 | 1 | 2 | 3 |
|---|---|---|---|---|---|
| | 4 | 0.006 | 0.007 | 0.012 | -0.014 |
| | 3 | 0.001 | 0.003 | 0.018 | -0.016 |
| | 2 | 0 | -0.051 | 0 | 0.020 |
| | 1 | 0.197 | -0.003 | -0.054 | 0.016 |
| | 0 | 0.512 | 0.185 | -0.024 | 0.016 |
| | | 0 | 1 | 2 | 3 |
| | | | | pixels | |

(These coefficients represent one out of the four symmetrical quadrants)

## TABLE 7

### Spatial interpolator in 20ms branch decoder

| field lines | | 0 | 1 | 2 | 3 | 4 | 5 | 6 | 7 | 8 |
|---|---|---|---|---|---|---|---|---|---|---|
| | 3 | 0.0011 | 0.0003 | 0.0010 | 0.0056 | 0.0093 | 0.0060 | -0.0015 | -0.0055 | -0.0029 |
| | 2 | -0.0084 | -0.0155 | -0.0251 | -0.0200 | -0.0032 | 0.0084 | 0.0079 | 0.0020 | -0.0007 |
| | 1 | 0.1007 | 0.0732 | 0.0164 | -0.0221 | -0.0233 | -0.0056 | 0.0060 | 0.0043 | 0.0005 |
| | 0 | 0.2267 | 0.1843 | 0.0912 | 0.0133 | -0.0155 | -0.0097 | -0.0006 | -0.0001 | -0.0005 |
| | | 0 | 1 | 2 | 3 | 4 | 5 | 6 | 7 | 8 |
| | | | | | | pixels | | | | |

The resulting filtered array is multiplied by four to give unity gain, since 3/4 of the samples are initially set to zero.)

## TABLE 8

### 8.4MHz low pass filter in 'compatible' MAC receiver

| 0.8633 | 0.1240 | -0.1094 | 0.0801 | -0.0557 | 0.0293 | -0.0147 | 0.0147 |
|--------|--------|---------|--------|---------|--------|---------|--------|
| 0 | 1 | 2 | 3 | 4 | 5 | 6 | 7 |

pixels

(These coefficients represent half of the filter. The centre coefficient is coefficient 0, and the other 7 coefficients are symmetrical about the centre.)

## TABLE 9

### Vertical interpolator for sample de-shuffler in 80ms branch decoder

| -0.164 | 0.664 | 0.664 | -0.164 |
|--------|-------|-------|--------|
| -3 | -1 | 1 | 3 |

picture lines from centre

(These coefficients act on samples in the field 1 lines above and below the sample to be interpolated, which is on an even field line .)

## Claims

1. A method of transmitting a video picture at high definition over a lower definition channel, comprising at least for some portions of the picture determining a motion vector indicative of the motion of the picture portion over the period of the high definition fields, and in such picture portions transmitting samples from a plurality of high definition fields in a format compatible with the lower definition format, the samples being repositioned prior to transmission so as to minimise judder in the compatible picture, the repositioning comprising calculating the average motion per field for each picture portion over the period of one picture at the lower definition format, rounding the resultant substantially to the nearest even number of pixels and picture lines per field period, and displacing the samples in dependence upon the resultant displacements and upon the distances from a datum of the timing of the high definition fields to which the samples relate.

2. A method according to claim 1, in which samples from four fields 1,2,3 and 4 at the high definition format are repositioned, the samples from field 3 remaining unmoved, the samples from fields 2 and 4 being moved by plus and minus the resultant displacement, and the samples from field 1 being moved by twice the resultant displacement.

3. A method of receiving a video picture representing a high definition picture over a lower definition channel, the picture being transmitted together with motion vectors indicative of the motion of at least some picture portions in the period between high definition fields, received samples being repositioned prior to decoding, the repositioning comprising calculating the average motion per field for each picture portion over the period of one picture at the lower definition format, rounding the resultant substantially to the nearest even number of pixels and picture lines per field period, and displacing the sample in dependence upon the resultant displacements and upon the distance from a datum of the timing of the high definition fields to which the samples relate.

4. A method of transmitting a video picture comprising receiving a source picture, and generating a transmitted picture by selecting specified pixels only from the source picture from different fields thereof, determining apparent motion of the picture between successive source fields, and before transmission repositioning at least some of the pixel values to different pixel positions in dependence upon the apparent motion and the source field from which the pixel is derived.

5. A method of receiving a video picture comprising receiving a transmitted picture, and generating an output picture by up-converting the transmitted picture to a higher field rate, the picture being transmitted together with information on the apparent motion of the picture between successive output fields, and repositioning at least some of the received pixel values to different pixel positions in dependence upon the apparent motion and the output field to which the pixel relates.

6. A method of transmitting a video picture at high definition over a low definition channel, in which picture portions are subjected to bandwidth compression selectively by two or more different methods in a first of which each transmitted field comprises information from one high definition field and in a second of which each transmitted field comprises information from a plurality $\underline{n}$ of high definition fields, and selectively attenuating the transmitted signal with a notch filter to attenuate frequencies centered on 1/n times the transmitted field frequency.

7. A method according to claim 6, in which n is four.

8. A method according to claim 6 or 7, in which at least for some portions of the picture a motion vector is transmitted indicative of the motion of the picture portion in the period between high definition fields, and in which the attenuation is applied only when the motion is below a predetermined value.

9. A machine method of video picture motion measurement, comprising correlating two pictures to determine correlation as a function of selective displacement, thereby to determine a plurality of peak correlation values corresponding to respective motion vectors, in which prior to correlation the pictures are prefiltered horizontally and/or vertically and subsampled substantially to reduce the complexity of the correlation step.

10. A machine method of video picture motion measurement comprising correlating two pictures to determine correlation as a function of selective displacement, thereby to determine a plurality of peak correlation values corresponding to respective motion vectors, in which the location of a peak is determined by fitting an inverted V over a high value and the adjacent values on either side thereof.

11. A method according to claim 10, in which the location of a peak is determined by fitting a first line through the high value and the lowest adjacent value, and then fitting a second line through the opposite adjacent point of equal but opposite gradient to the first line, whereby the point of intersection of the first and second lines indicates the location of the desired peak.

12. A machine method of video picture motion measurement, comprising correlating two pictures to determine correlation as a function of selective displacement, thereby to determine a plurality of peak correlation values corresponding to respective motion vectors, and assigning to each of a plurality of small areas of the pictures the one of the motion vectors that gives the best fit in deriving one of the pictures from the other, in which the assignment step comprises calculating for each motion vector an assignment error over both a one-field and a two-field period, summing the two assignment errors to give a total assignment error, and selecting the vector that gives the minimum total assignment error.

13. A method according to claim 12, in which the summing step comprises a weighted addition.

14. A method according to claim 13, in which the weighting factor is:1 + 0.5 * mod(V) where mod(V) is the magnitude of the motion vector in pixels per picture period.

15. A method of transmitting a video picture, comprising receiving a video picture from a source, bandwidth compressing the video signal generated by the source selectively by two or more different methods, controlling the selection of the bandwidth compression in response to picture content and transmitting a control signal along with the transmitted video picture.

FIG.1

FIG.2

FIG.3(a)

FIG.3(b)

FIG.3(c)

FIG.3(d)

FIG.4(b)

FIG.4(a)

——————— source line

— — — — output lines

FIG.5

FIG.6

X POINT ON CORRELATION SURFACE
O INTERPOLATED LOCATION OF PEAK

FIG.7

$a_{01}$

$a_{11}$

$\cdot\, a_{xy}$

FIG.8

y

$a_{00}$

$a_{10}$

x

1 2 3 4 1 2 3 4 1 2 3 4

MOTION
OVER ONE
PICTURE
PERIOD

* - 'SEQUENTIAL' FIELDS

X - PIXELS FOR WHICH VECTORS ARE BEING ASSIGNED

O - INTERPOLATED PIXELS

FIG.9

FIG.10

MOTION IN 1 FIELD PERIOD

FIG.11(a)

FIG.11(b)